# EUROPEAN PATENT APPLICATION

(11) **EP 2 692 245 A2**
(43) Date of publication of application: **05.02.2014**
(21) Application number: 13178535.4
(22) Date of filing: 30.07.2013
(51) Int. Cl.: A23N 12/00, A23L 1/01, A23B 7/06, A23L 1/025

(54) **Food product preparation method**

(30) Priority: 30.07.2012 GB 201213515
(71) Applicant: C.S.I. Compagnie Surgelati Italiana S.P.A., 00144 Rome (IT)
(72) Inventor: Cammaroto, Antonio, 04012 Cisterna di Latina (IT); Di Principe, Antonio, 04012 Cisterna di Latina (IT); Rotunno, Carlo, 04012 Cisterna di Latina (IT); Esti, Marco, 01100 Viterbo (IT); Liburdi, Katia, 01100 Viterbo (IT); Benucci, Ilaria, 01100 Viterbo (IT)
(74) Representative: Murphy, Colm Damien

(57) **Abstract**

A method and system for preparing a food product for storage by subjecting the food product to microwaves and hot water blanching simultaneously, and subsequently freezing the food product.

## Description

### Field of the invention

The present invention is in the field of food preparation. In particular, the present invention relates to methods for preparing food for storage, systems useful for performing such methods and stored food products prepared by such methods.

### Background to the invention

For many years food products have been preserved by freezing, allowing produce to be stored for a considerably longer period than the fresh product would remain viable.

Although freezing alone can, in some cases, be successful in retaining the viability of the food product, the freezing process may also cause the quality of the product to deteriorate significantly as compared to the fresh product. This is particularly the case for food products with a high water content, such as fish, meat, fruit and vegetables, because the formation of ice crystals during the freezing process causes the cell walls to lyse, causing direct damage and releasing enzymes which degrade components of the food product. This deterioration can be detected as a decline in the taste, appearance and texture profile of the food product, as well as a reduction in the levels of nutritional components in the food product, once the food product is de-frosted and prepared for consumption.

In order to circumvent some of these disadvantages, food products are often blanched prior to freezing. Blanching is a short duration heat-treatment process that deactivates enzymes present within the food product, leading to a reduced level of subsequent degradation of components within the food product. Typically, blanching treatment times and temperatures are used that are the minimum necessary to achieve enzyme inactivation, and microbial safety, whilst avoiding fully cooking the food product. Food products which have been blanched prior to freezing are therefore more stable and retain a greater proportion of the nutritional value of the original fresh food product during storage, and have a taste, appearance and texture profile which is more similar to the fresh food product than produce which has been frozen without a prior blanching step.

Typically, blanching is carried out by immersing the food product in boiling, or near boiling water, although other forms of blanching, such as steam blanching, are known. In an industrial food processing application food products can be carried on a conveyor belt, through a blanching tunnel in which the food product is immersed in water of the desired temperature for an appropriate length of time.

During standard water based blanching,enzymes within the food product are deactivated by heat transfer from the outside of the product. The required blanching time therefore depends in part upon the size of the food product, since sufficient heat must be applied in order to deactivate enzymes within the centre of the food product. As a result, food products having larger pieces must commonly be blanched for several minutes. This has the disadvantage of being a time-consuming and costly process. In addition, at least the outside of the food product can become cooked during the blanching process, decreasing the freshness of the food product and worsening the taste, appearance and texture profile. Prolonged contact with hot water may also have the disadvantage of causing water soluble components (vitamins and nutrients) to leach out of the food product.

It would therefore be advantageous to find methods to achieve enzyme inactivation in food products in shorter times, in order to optimise energy efficiency and minimise loss of nutrients and organoleptic quality. One proposed approach to this problem has been to look at alternative blanching methods. One example is to attempt to combine conventional blanching with the additional supply of energy from microwaves.

For example, EP0498 972 discloses a method that attempts to combine steam blanching with additional microwave blanching.

In another example US3578463 discloses a method that involves sequential water blanching, microwave blanching and a final second water blanching step to even out the blanching process.

Although such combined energy methods have been proposed, they have not been successfully applied in industry, and conventional water blanching remains standard. In practice, achieving an efficient and effective microwave treatment has proved to be technically challenging.

It is an object of the present invention to provide an improved blanching method, that addresses the disadvantages of known methods and provides a quick and efficient method of food preparation which achieves enzyme inactivation without cooking the food product, and yields a food product with increased nutritional retention and an improved taste, appearance and texture profile.

### Summary of the invention

The inventors have surprisingly discovered that subjecting a food product to simultaneous hot water blanching and microwave blanching prior to freezing results in a food product in which the enzymes are rapidly deactivated, retaining a greater proportion of the nutritional value of the food product, and a taste, appearance and texture profile which is improved relative to a corresponding food product which has been conventionally blanched prior to freezing. The simultaneous combination of hot water blanching and microwave blanching delivers benefits compared to the sequential application of conventional blanching and microwaves, and may overcome at least some of the disadvantages that would arise from a process based on combining steam and microwave blanching.

In one aspect the present invention therefore provides a method for preparing a food product for storage comprising:
a) subjecting the food product to simultaneous microwaves and hot water blanching; and
b) subsequently freezing the food product.

Preferably, the method is carried out as a continuous process, and the microwaving and hot water blanching are carried out simultaneously in a single processing step of the continuous process.

Preferably, the food product is subjected to microwaves and hot water blanching at a temperature of at least 98°C.

Preferably, the food product is subjected to microwaves and hot water blanching at a temperature of not more than 99°C.

Preferably, the food product is subjected to microwaves and hot water blanching at atmospheric pressure.

Preferably, the food product is subjected to microwaves and hot water blanching for a total maximum time of 3 minutes.

Preferably, the food product is cooled prior to freezing.

Preferably, the food product is cooled in water.

Preferably, the water is at a temperature of 0-10°C.

Preferably, the food product is cooled for a period of 1 to 5 minutes.

Preferably, the food product is fish, meat, a fruit, a vegetable, a pulse, a herb or a spice.

Preferably, the fish, meat, fruit, vegetable, pulse, herb or spice is selected from the group consisting of poultry, beef, pork, lamb, game, processed meat, offal, fish, seafood, root vegetables, legumes, leaf vegetables, bulb vegetables, fruit vegetables, brassicas, stalk vegetables, tuber vegetables, fruits, dry beans, dry broad beans, dry peas, chickpeas, dry cowpeas, pigeon peas, lentils, Bambara groundnut, earth pea, garbanzo, Bengal gram, black-eyed peas, blackeye bean, arthar/toot, cajan pean, Congo bean, gandules, vetch, common vetch, lupins, minor pulses, herbs and spices.

Preferably, the fish, meat, fruit, vegetable, pulse, herb or spice is selected from the group consisting of chicken, poussin, duck, emu, goose, ostrich, turkey, guineafowl, pheasant, beef, veal, pork, bacon, sausages, pancetta, ham, prosciutto, gammon, lamb, hogget mutton, rabbit, venison (red deer, row deer, fallow deer, sika deer & muntjac deer) pheasant, goose, duck, grouse, hare, partridge, woodcock, wood pigeon hare, bacon, sausages, chorizo, pancetta, prosciutto, haggis and ham, scrotum, brain, chitterlings (pig's small intestine), trotters (feet), heart, head (of pigs, calves, sheep and lamb), kidney, liver, spleen, "lights" (lung), sweetbreads (thymus or pancreas), fries (testicles), tongue, snout (nose), tripe (reticulum) maws (stomach), fish, catfish, eel, haddock, herring, anchovies, crawfish, mullet, mackerel, pollock, flounder, sardine, sole, trout, salmon, tilapia, whitefish, whitebait, mahi mahi, snapper, halibut, cod, bass, perch, monkfish, tuna (canned), carp, sea bass,bluefish, Grouper, Swordfish, orange roughy, marlin, tilefish, tuna (Ahi) shark, clam, lobster, shrimp, prawn, langoustine, squid, scallop, crab, oyster.cassava, crosne, Jerusalem artichoke, jicama, potato, sweet potato, taro, yam, alfalfa, clover, peas, beans, lentils, lupins, mesquite, carob, soy, peanuts, arugula, Brussels sprouts, cabbage, chicory, Chinese cabbage, collards, cress, dandelion nettles, endive, lamb's lettuce, lettuce, nasturtium, purslane, radicchio, savoy, sea kale, sorrel, spinach, chives, garlic, leeks, onions, scallions, shallots, water chestnuts, avocados, chayote, cucumbers, aubergine, okra, olives, peppers, squash, tomatoes, tomatillos, artichokes, broccoli, broccoli rabe, cauliflower, asparagus, bamboo, cardoon, celery, chard, fiddlehead, fennel, kohlrabi, beets, burdock, carrots, celeriac, malanga, parsnips, radishes rutabaga, salsify, turnips, apple, pear, banana, cherry, pineapple, mango, peach, grape, coconut, strawberry, raspberry, blackberry, gooseberry, red currant, black currant, white currant, papaya, guava, lychee, rhubarb, blueberry, dry beans (kidney bean, haricot bean, pinto bean, navy bean, lima bean, butter bean, azuki bean, adzuki bean, mung bean, golden gram, green gram , black gram, urad, scarlet runner bean, ricebean, moth bean, tepary bean, dry broad beans (horse bean, broad bean, field bean, dry peas (garden pea, protein pea), chickpea, garbanzo, Bengal gram, dry cowpea, black-eyed pea, blackeye bean, pigeon pea, Arhar /Toor, cajan pea, Congo bean, gandules, lentil, bambara groundnut, earth pea, vetch, common vetch, lupins, minor pulses, (hablab, hyacinth bean, jack bean, sword bean, winged bean, velvet bean, cowitch and yam bean).

Preferably, the method further comprises one or more preceding steps selected from the group consisting of cleaning, washing, peeling and cutting the food product.

Preferably, the method further comprises the step of combining the food product into a complex food product.

Preferably, the method further comprises the step of packing the food product or complex food product into a steam bag.

Preferably, the method further comprises the step of reheating the food product or complex food product.

Preferably, the food product is reheated to a temperature of at least 70°C.

Preferably, the reheating is performed using direct heat, ambient heat, microwaves or blanching.

In another aspect the present invention therefore provides a method for preparing a complex food product for storage comprising:
a) subjecting a food product to simultaneous microwaves and hot water blanching;
b) combining the food product into a complex food product; and
c) subsequently freezing the complex food product.

Preferably, the method further comprises the step of cooling the food product before combining the food product into the complex food product.

Preferably, the method further comprises the step of reheating the food product or complex food product.

Preferably, the food product is reheated to a temperature of at least about 70°C.

Preferably, the reheating is performed using microwaves, blanching, ambient hear or direct heat.

In a further aspect the present invention therefore provides a food product or complex food product prepared according to the method of said one aspect or said another aspect.

In a yet further aspect the present invention therefore provides a system for preparing a food product for storage comprising:
a) a device capable of subjecting a food product to simultaneous microwaves and hot water blanching; and
b) a freezer.

Preferably, the system further comprises a cooler for cooling the food product.

Preferably, the system further comprises one or more of a device for cleaning the food product, a device for washing the food product, a device for peeling the food product and a device for cutting the food product.

### Detailed description of the invention

The present invention relates to a method of preparing a food product for storage, particularly for storage as a frozen product.

The method of the present invention permits food products to be prepared for storage whilst retaining a greater proportion of the nutrients originally present within the food product than prior art methods.

It is known in the art that microwaves function to heat food products from the inside, whilst convention methods of blanching heat a food product from the outside. The inventors therefore hypothesised that subjecting a food product to simultaneous water blanching and microwaves could rapidly deactivate enzymes present within the food product, decreasing the amount of time the food product was subjected to heat prior to freezing. Such a reduction in heat exposure time was expected to increase nutrient retention and enhance the taste, appearance and texture profile of the food product.

The present invention therefore provides a method for preparing a food product for storage comprising:
a) subjecting the food product to microwaves and hot water blanching simultaneously; and
b) subsequently freezing the food product.

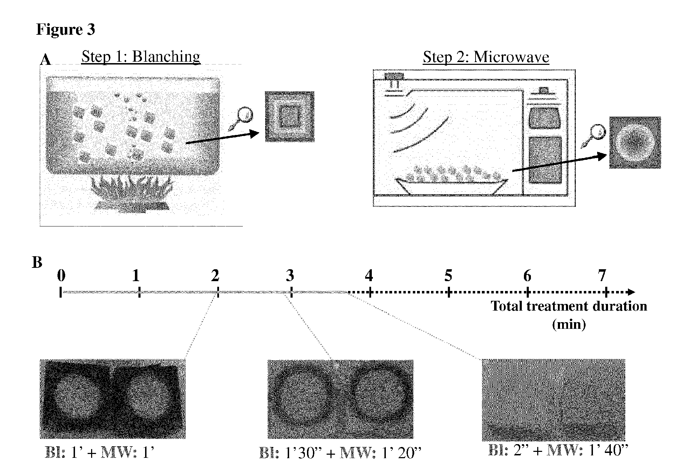

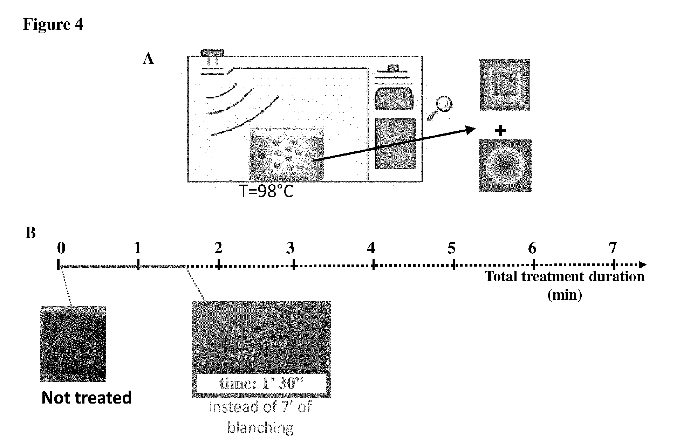

The inventors also surprisingly discovered that the length of heat application required for enzyme deactivation within a food product was significantly reduced if the food product was subjected to both blanching and microwaves simultaneously rather than consecutively. It is believed that the simultaneous use of hot water blanching and microwave blanching may give superior results because in this system energy can be transferred to the food product in up to 3 different ways simultaneously; forced water convection, conduction, and irradiation with microwaves. Further, in preferred examples the different energy transfer mechanisms are always all active together (not intermittently). As is discussed in detail below, figures 3 and 4 compare sequential and simultaneous water and microwave blanching and demonstrate that there is a clear reduction in blanching time, when the two treatments are delivered simultaneously.

It is an essential feature of the invention that the conventional blanching is hot water blanching carried out using with hot water. The hot water blanching may, for example, use hot water at a temperature of between 98°C and 99°C, at 1atm pressure, and not with pressurised steam. In other examples the hot water may be at a temperature of less than 98°C, and in some examples may be less than 96°C.

The use of hot water may have a number of important advantages; working at lower temperature and pressure results in less damage to the food product during the process, and also helps to achieve a uniform product because the food product is submerged in water during the whole treatment. Using water also improves the efficiency of the process, because any microwave (MW) energy that is not absorbed by the food product, will be absorbed by and heat blanching water, so that this microwave energy is effectively recovered and used to heat the blanching water, rather than being lost. It is standard practice to operate any water blanching process in a counter-current heat-exchange system with full re-circulation of the blanching water in the system in order to facilitate energy recovery, and it will be appreciated that the heating of the water by the otherwise unused MW energy will lead to enhanced energy recovery. Furthermore using water instead of steam is cheaper, requiring less energy to heat and allowing more easy energy recovery in the system.

The use of water also allows for the removal of any components of the food product, that must be achieved to meet legal requirements, for example, achieving correct nitrate levels in spinach leaves. A process that does not allow any leaching of components from the food product, may have difficulty complying with these legal requirements.

### Food product

The term food product encompasses any edible product, preferably an edible product having a nutritional value to a mammal, such as a human.

The food product used in the method of the present invention is preferably a natural food product, such as a meat, fish, fruit, pulses, vegetables, herbs or spices. All types of meat, fish, fruit, vegetables, pulses, herbs and spices are contemplated, such as poultry, beef, pork, lamb, game, processed meat, offal, fish, seafood, root vegetables, legumes, leaf vegetables, bulb vegetables, fruit vegetables, brassicas, stalk vegetables, tuber vegetables, fungi, fruit, dried fruit, dry beans, dry broad beans, dry peas, chickpeas, dry cowpeas, pigeon peas, lentils, Bambara groundnut, earth pea, garbanzo, Bengal gram, black-eyed peas, blackeye bean, arthar/toot, cajan pean, Congo bean, gandules, vetch, common vetch, lupins, minor pulses, herbs and spices.

Poultry includes any bird, such as chicken, poussin, duck, emu, goose, ostrich, turkey, guineafowl and pheasant.

Beef includes any meat product originating from a cow including veal.

Pork includes any meat product originating from a pig including bacon, sausages, pancetta, ham, prosciutto and gammon

Lamb includes any meat product originating from a sheep, including hogget and mutton.

Game includes any animal hunted for food, preferably not domesticated, such as rabbit, venison (red deer, row deer, fallow deer, sika deer & muntjac deer) pheasant, goose, duck, grouse, hare, partridge, woodcock, wood pigeon and hare.

Processed meat includes bacon, sausages, chorizo, pancetta, prosciutto, haggis and ham.

Offal includes scrotum, brain, chitterlings (pig's small intestine), trotters (feet), heart, head, kidney, liver, spleen, "lights" (lung), sweetbreads (thymus or pancreas), fries (testicles), tongue, snout (nose), tripe (reticulum) and maws (stomach) of any animal such as cow, pig, sheet, deer, or poultry.

Fish includes catfish, eel, haddock, herring, anchovies, crawfish, mullet, mackerel, pollock, flounder, sardine, sole, trout, salmon, tilapia, whitefish, whitebait, mahi mahi, snapper, halibut, cod, bass, perch, monkfish, tuna (canned), carp, sea bass, bluefish, Grouper, Swordfish, orange roughy, marlin, tilefish, tuna (Ahi) and shark. Seafood includes any food product found in water which is not a fish, such as clam, lobster, shrimp, prawn, langoustine, squid, scallop, crab and oyster.

Tuber vegetables include cassava, crosne, Jerusalem artichoke, jicama, potato, sweet potato, taro, and yam.

Legumes include green beans, cannellini beans, alfalfa, clover, peas, beans, lentils, lupins, mesquite, carob, soy, and peanuts.

Leaf vegetables include arugula, Brussels sprouts, cabbage, chicory, red cabbage, white cabbage, savoy cabbage, Chinese cabbage, collards, cress, dandelion nettles, endive, lamb's lettuce, lettuce, nasturtium, purslane, radicchio, savoy, sea kale, sorrel and spinach.

Bulb vegetables include chives, garlic, red garlic, leeks, onions, red onions, white onions, scallions, shallots and water chestnuts.

Fruit vegetables include avocados, chayote, cucumbers, courgettes, aubergine, okra, olives, peppers, squash, tomatoes and tomatillos.

Brassicas include artichokes, broccoli, broccoli rabe and cauliflower.

Stalk vegetables include asparagus, bamboo, cardoon, celery, chard, fiddlehead, fennel and kohlrabi.

Root vegetables include beets, burdock, carrots, celeriac, malanga, parsnips, radishes rutabaga, salsify and turnips.

Fungi includes mushrooms and truffles.

Fruits include apple, pear, banana, cherry, pineapple, mango, peach, grape, coconut, strawberry, raspberry, blackberry, gooseberry, red currant, black currant, white currant, papaya, guava, lychee, rhubarb and blueberry.

Pulses include dry beans (kidney bean, haricot bean, pinto bean, navy bean, lima bean, butter bean, azuki bean, adzuki bean, mung bean, golden gram, green gram , black gram, urad, scarlet runner bean, ricebean, moth bean, tepary bean, dry broad beans (horse bean, broad bean, field bean, dry peas (garden pea, protein pea), chickpea, garbanzo, Bengal gram, dry cowpea, black-eyed pea, blackeye bean, pigeon pea, Arhar /Toor, cajan pea, Congo bean, gandules, lentil, bambara groundnut, earth pea, vetch, common vetch, lupins ,and minor pulses, (hablab, hyacinth bean, jack bean, sword bean, winged bean, velvet bean, cowitch and yam bean).

Herbs and spices include chilli, parsley, dill, chives, coriander, basil, oregano, rosemary, thyme, leaf celery, borage (borago officinalis), pimpinelle/salad burnet (sanguisorba minor), chervil (rumex acetosa), wild majoram, tarragon, sage, mint, bay leaves.

The food product may be subjected to the method of the present invention in its whole form, or it may be peeled, segmented, or chopped into sections. Sections may be provided at any size within a range of approximately 0.01cm³, 0.02cm³, 0.03cm³, 0.04cm³, 0.05cm³, 0.06cm³, 0.07cm³, 0.08cm³, 0.09cm³, 0.1cm³, 0.2cm³, 0.4cm³, 0.5cm³, 0.6cm³, 0.7cm³, 0.8cm³, 0.9cm³, 1cm³, 2cm³, 3cm³, 4cm³, 5cm³, 6cm³, 7cm³, 8cm³, 9cm³, 10cm³, 11cm³, 12cm³, 13cm³, 14cm³, 15cm³, 16cm³, 17cm³, 18cm³, 19cm³, 20cm³, 25cm³, 30cm³, 35cm³, 40cm³, 45cm³, 50cm³, 60cm³, 70cm³, 80cm³, 90cm³, 100cm³ or more. It will be appreciated that the smallest flat size of the food product will be about 0.1cm², but that smaller volumes are contemplated to take account of very thin flat food products, such as herbs.

In one aspect, the present invention provides a food product prepared according to the method of the present invention. Such a food product may be any of the types of food products described above. The food product will generally be in frozen form, having been subjected to freezing as part of the method of the invention. However, the invention also encompasses the food product in non-frozen forms, such as in a thawed form.

### Complex food product

The method of the present invention also contemplates incorporating a food product which has been subjected to the method of the invention into a complex food product.

A complex food product is defined as a food product which comprises one or more food products. Complex food products may include pasta, soups and fresh or frozen ready meals. Within the scope of the invention, one or more (e.g. 1, 2, 3, 4, 5, 6, 7, 8, 9, 10 or more) food products which have been subjected to the method of the invention may be incorporated into a complex food product.

Following incorporating a food product which has been subjected to the method of the invention into a complex food product, the invention also encompasses a method comprising the additional step of reheating the complex food product. The complex food product may be reheated to a temperature of at least about 70°C, such as 70°C, 71°C, 72°C, 73°C, 74°C, 75°C, 76°C, 77°C, 78°C, 79°C, 80°C, 71°C, 82°C, 83°C, 84°C, 84°C, 86°C, 87°C, 88°C, 89°C, 90°C, 91°C, 92°C, 93°C, 94°C, 95°C or more.

Within this embodiment, the complex food product may be reheated using microwaves, direct heat e.g. on a hob, ambient heat e.g. in an oven or blanching e.g. in a steam bag.

The invention also encompasses a complex food product produced according to the method of the invention.

### Microwaves & Blanching

As discussed above, the method of the present invention requires the simultaneous application of both microwaves and hot water blanching to a food product. These two heat sources are preferably applied for the same time period. However, the present invention also encompasses the application of both of these heat sources for different periods of time, the food product will be considered to have been simultaneously exposed to blanching and microwaves provided there is some time period during which the food product is subjected to both heat sources.

The aim of applying these two heat sources simultaneously within the method of the invention is to achieve inactivation and/or denaturation of substantially all, e.g. 90%, 95%, 96%, 97%, 98%, 99% or more, of the enzymes present within the food product, and the heat sources should therefore be applied for the length of time necessary to achieve this aim. An enzyme is considered to be inactivated or denatured if it demonstrates less than 10% of its normal activity, such as less than 10%, 5%, 4%, 3%, 2%, 1% or less.

In a particular embodiment, enzyme denaturation can be measured as the inactivation of peroxidase because this enzyme is robust and plays a role in loss of product quality during storage of improperly blanched food products. As peroxidase is relatively difficult to inactivate, peroxidase inactivation is generally regarded as a good marker for inactivation of all enzymes within the food product.. Peroxidase activity may be measured according to the following method:
- Spray peroxide onto the food product
- Spray guaiacol onto the food product
- Wait 60 seconds
- If within 60 seconds there is no change in colour the peroxidase is deactivated; if any brown spots appear on the product the peroxidase is still active and further enzyme denaturation is required.

Another aim of applying microwaves and hot water blanching to food products in accordance with the method of the invention is to kill any bacteria present upon or within the food product. Here, the aim is kill substantially all e.g. 50%, 55%, 60%, 65%, 70%, 75%, 80%, 85%, 90%, 95%, 96%, 97%, 98%, 99% or more of any bacteria present upon or within the food product.

Preferably the food product is subjected to the microwaves and hot water blanching for the minimum time necessary to achieve these aims. Preferably, less than 10 minutes, e.g. less than 10 minutes, less than 9 minutes, less than 8 minutes, less than 7 minutes, less than 6 minutes, less than 5 minutes, less than 4 minutes, less than 3 minutes, less than 2 minutes, less than 1 minute, less than 30 seconds, less than 25 seconds, less than 20 seconds, less than 15 seconds, less than 10 seconds, less than 9 seconds, less than 8 seconds, less than 7 seconds, less than 6 seconds, less than 5 seconds, or less.

Preferably the food product is subjected to blanching in water at a temperature of 85°C or more, such as 85°C, 86°C, 87°C, 88°C, 89°C, 90°C, 91°C, 92°C, 93°C, 94°C, 95°C, 96°C, 97°C, 98°C, 99°C or 100°C. Preferably, the blanching is carried out at atmospheric pressure. In other examples the blanching may be carried out at a pressure other than atmospheric pressure. In some examples the blanching may be carried out at an elevated pressure above atmospheric pressure.

Preferably, when the blanching is carried out at atmospheric pressure the blanching is carried out in water at a temperature of 99°C or less, and more preferably 98°C or less.

The microwaves are applied to the food product at a wavelength of between 1m and 1mm or, equivalently, with frequencies between 300 MHz (0.3 GHz) and 300 GHz. Preferably the frequency of the microwaves will be between 0.915 GHz and 2.45 GHz. In one example the frequency of the microwaves is 2.45 GHz.

The microwaves may be applied at a power level of 50-250 W per kg/h, preferably 100-150 W per kg/h. Examples of appropriate power levels include 100 W per kg/h, 105 W per kg/h, 110 W per kg/h, 115 W per kg/h, 120 W per kg/h, 125 W per kg/h, 130 W per kg/h, 135 W per kg/h, 140 W per kg/h and 150 W per kg/h.

Preferably the food product will remain substantially uncooked (i.e. substantially raw) once the method of the invention has been applied to the food product.

### Cooling

The method of the invention may also comprise a cooling step following subjecting the food product to the simultaneous hot water and microwave blanching, prior to freezing.

The cooling step may including cooling by any means known in the art, but is preferably accomplished by water, air or a combination of water and air.

The cooling step preferably involves cooling the food product in water. Within this embodiment of the invention, the water is preferably at a temperature of 2-15°C, more preferably 3-15°C or 5-10°C. Exemplary suitable temperatures are 2°C, 3°C, 4°C, 5°C, 6°C, 7°C, 8°C, 9°C, 10°C, 11°C, 12°C, 13°C, 14°C and 15°C.

Within this embodiment, the food product may be cooled for 1-20 minutes, preferably 2-10 minutes or 3-5 minutes. Exemplary suitable cooling times are 2 minutes, 3 minutes, 4 minutes, 5 minutes, 6 minutes, 7 minutes, 8 minutes, 9 minutes, 10 minutes, 11 minutes, 12 minutes, 13 minutes, 14 minutes and 15 minutes.

### Freezing

The method of the invention requires the food product to be frozen after it has been subjected to blanching and microwaves. Freezing can be performed using any method known in the art i.e. contact freezer, tunnel freezers (linear or spiral) and flow freezer. These freezers usually use ammonia or nitrogen.

In one embodiment, the food product may be frozen at a temperature of -18°C or less, e.g. - 18°C, -19°C, -20°C, -21°C, -22°C, -23°C, -24°C, -25°C, -26°C, -27°C, -28°C, -29°C, -30°C, - 31°C, -32°C, -33°C, -34°C, -35°C, -36°C, -37°C, -38°C, -39°C, -40°C, -41°C, -42°C, -43°C, - 44°C, -45°C, -46°C, -47°C, -48°C, -49°C, -50°C or less.

The freezing process may require the food product to be subjected to the temperature required by the freezing method for up to 4 hours, e.g. 1 minute, 2 minutes, 3 minutes, 4 minutes, 5 minutes, 6 minutes, 7 minutes, 8 minutes, 9 minutes, 10 minutes, 11 minutes, 12 minutes, 13 minutes, 14 minutes, 15 minutes, 20 minutes, 25 minutes, 30 minutes, 35 minutes, 40 minutes, 45 minutes, 50 minutes, 55 minutes, 1 hour, 1.5 hours, 2 hours, 3, hours or 4 hours.

Following freezing, the food product may be stored in frozen form for up to thirty six months, e.g. 35 months, 34 months, 33 months, 32 months, 31 months, 30 months, 29 months, 28 months, 27 months, 26 months, 25 months, 24 months, 23 months, 22 months, 21 months, 20 months, 19 months, 18 months, 17 months, 16 months, 15 months, 14 months, 13 months, 12 months, 11 months, 10 months, 9 months, 8 months, 7 months, 6 months, 5 months, 4 months, 3 months, 2 months, 1 months, 4 weeks, 3 weeks, 2 weeks, 1 week or less. The frozen food product may be stored at a temperature of -18°C or less, e.g. -18°C, -19°C, -20°C, -21°C, -22°C, -23°C, -24°C, -25°C, -26°C, -27°C, -28°C, -29°C, -30°C, -31°C, -32°C, -33°C, - 34°C, -35°C, -36°C, -37°C, -38°C, -39°C, -40°C, -41°C, -42°C, -43°C, -44°C, -45°C, -46°C, - 47°C, -48°C, -49°C, -50°C or less.

### Nutrient retention

As discussed above, one of the advantages of the present invention is an improved level of nutrient retention. In this context, the term "nutrient" encompasses any component of a food product which has nutritional value for a mammal, such as a human. Such components include vitamins such as vitamin A (retinol), vitamin B (foltate), vitamin C (ascorbic acid), vitamin E (tocopherols and tocotrienols), folate, THF, 5-MetTHF, α Carotene, B Carotene, nitrate, minerals such as mineral salts including Na, Mg, Ca, K, P, Fe, Cu, Zn, Se, Mn, and fibre.

In one embodiment, the method of the invention retains at least about 5% more of one or more (e.g. 1, 2, 3, 4, 5, 6, 7, 8, 9, 10 or more) nutrients within the food product, compared to a similar food product which has been subjected to a traditional blanching method. Within this embodiment, the method may retain at least about 6%, at least about 7%, at least about 8%, at least about 9%, at least about 10%, at least about 11%, at least about 12%, at least about 13%, at least about 14%, at least about 15%, at least about 16%, at least about 17%, at least about 18%, at least about 19%, at least about 20%, at least about 21%, at least about 22%, at least about 23%, at least about 24%, at least about 25%, at least about 26%, at least about 27%, at least about 28%, at least about 29%, at least about 30%, at least about 35%, at least about 40%, at least about 45%, at least about 50% or more of one or more nutrients within the food product, compared to a similar food product which has been subjected to a traditional blanching method. Here, the amount of nutrient retention observed may differ for each individual nutrient analysed.

Nutrient retention is measured as the amount of a nutrient present within the food product (mg/kg) following performance of the method of the invention, and can relate to dry weight or fresh weight of the food product. This is expressed as a percentage value, compared to the amount of the same nutrient present in a comparable food product which has been subjected to a traditional blanching method. The method used to determine the amount of each nutrient present within the food product is indicated in Table 1, below.

**Table 1 - Methods used for nutrient determination**

| **Nutrient** | **Method used for detection** |
|---|---|
| Vitamin C | HPLC & UV detection |
| Vitamin A | HPLC & UV detection |
| Vitamin E | HPLC & fluorimetric detection |
| Fibre | Gravimetric analysis |
| Nitrate | Liquid chromatography detection |
| Folate | HPLC & fluorimetric detection |
| Na, Mg, Ca & P | HPLC & ionic chromatography |
| Fe, Cu, Zn, Se, Mn | ICP Mass |

Nutrient retention may be measured during the method of the invention (e.g. after the food product has been subjected to hot water and microwave blanching, but before the product is frozen), following performance of the method of the invention (i.e. after the food product has been subjected to hot water and microwave blanching and frozen), or after any of the subsequent steps which may be formed following performance of this method (e.g. thawing, packaging into a steam bag and/or reheating).

### Improved taste, appearance and texture profile

In one aspect, a food product which has been subjected to the method of the invention may have an improved taste, appearance and texture profile, compared to a similar sample which has been subjected to the traditional blanching method.

It will be apparent to the person skilled in the art that this is a subjective measurement, and open to interpretation. However, a food product should be considered to have an improved taste, appearance and flavour profile if it has a more similar appearance, smell, texture or taste to the fresh product than does a similar sample which has been subjected to a blanching process alone.

The taste, appearance and texture profile of the treated sample may be assessed directly after sample treatment with microwaves and blanching, or following freezing and subsequent thawing and/or cooking.

### Preceding steps

The method of the invention may comprise additional steps which are performed prior to subjecting the food product to hot water and microwave blanching.

In one embodiment, the additional steps may be selected from the group consisting of cleaning, washing, peeling and cutting.

Within this embodiment "cleaning" refers to the removal of dirt and/or other particles from the surface of the food product without the use of water, e.g. using pressurised air.

Within this embodiment "washing" refers to the removal of dirt and/or other particles from the surface of the food product with water, including water in combination with cleaning solutions.

"Peeling" describes the removal of skin and/or other material from the outer surface of the food product.

"Cutting" describes the use of a blade to divide the food product into smaller sized pieces. Cutting may be performed using a blade which is manually operated by a user, e.g. a knife, or a machine containing one or more blades. Cutting may result in the food product having a size of 0.1cm³, 0.2cm³, 0.4cm³, 0.5cm³, 0.6cm³, 0.7cm³, 0.8cm³, 0.9cm³, 1cm³, 2cm³, 3cm³, 4cm³, 5cm³, 6cm³, 7cm³, 8cm³, 9cm³, 10cm³, 11cm³, 12cm³, 13cm³, 14cm³, 15cm³, 16cm³, 17cm³, 18cm³, 19cm³, 20cm³, 25cm³, 30cm³, 35cm³, 40cm³, 45cm³, 50cm³, 60cm³, 70cm³, 80cm³, 90cm³, 100cm³ or more.

### Subsequent steps

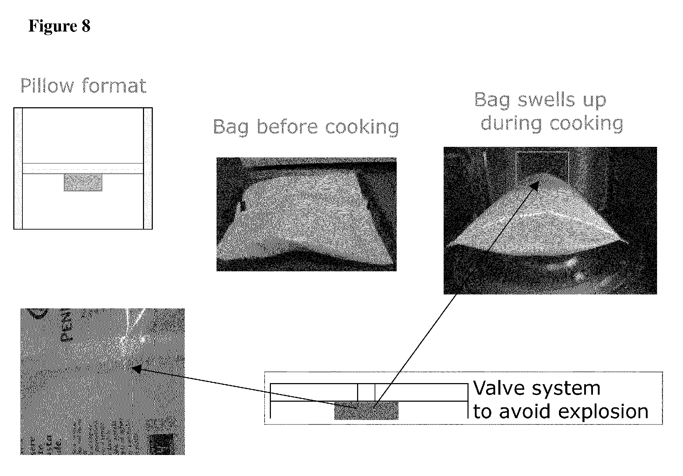

The method of the invention may comprise the further step of packing the food product or complex food product into a steam bag. A steam bag is defined as any sealable container within which the food product may be reheated, for example using a microwave or conventional oven. The working principle of a steam bag is that when it is heated the product inside the bag releases water as steam, the bag swells up and the product is steam-cooked. This is shown in Figure 8. To prevent possible bag explosion, there is a relief valve. The steam bag is able to work with high temperatures (up to 200°C) both in a traditional oven and a microwave oven, The use of a steam bag prevents the leaching of nutrients and reheating in a steam bag decreases the nutrient and taste/texture impact of reheating. The steam bag may be formed of any suitable material, but is preferably formed from plastic. The plastic may be transparent or semi-transparent so that the food product or complex food product can be viewed through the steam bag, or it may have a transparent or semi-transparent window for viewing the food product or complex food product.

The method of the invention may comprise the further step of reheating the food product or complex food product. Such reheating may comprise reheating only, or may comprise cooking in addition to or in place of reheating.

The food product may be reheated to a temperature of at least about 70°C, such as 70°C, 71°C, 72°C, 73°C, 74°C, 75°C, 76°C, 77°C, 78°C, 79°C, 80°C, 71°C, 82°C, 83°C, 84°C, 84°C, 86°C, 87°C, 88°C, 89°C, 90°C, 91°C, 92°C, 93°C, 94°C, 95°C, 96°C, 97°C, 98°C, 99°C or more.

Within this embodiment, complex product may be reheated using microwaves, direct heat e.g. on a hob, ambient heat e.g. in an oven, or blanching.

### System for performance of the method

In another aspect, the invention provides a system for preparing a food product for storage comprising:
a) a device or devices capable of subjecting a food product to simultaneous microwaves and hot water blanching; and
b) a freezer.

The freezer may be a deep freezer, or some other device able to rapidly freeze the food product. A cooler to cool the food product befor it is frozen may also be provided.

Within this aspect the food product may be subjected to blanching and microwaves simultaneously using one device or multiple devices.

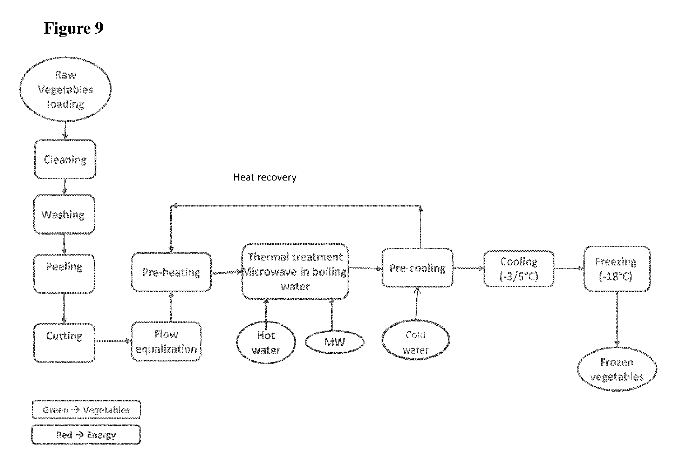

Within this embodiment, the system preferably includes any additional devices required to perform the steps shown in the flow diagram of Figure 9. In particular, the system may comprise one or more of a device for cleaning the food product, a device for washing the food product, a device for peeling the food product and a device for cutting the food product. One or more of these devices may be combined, i.e. one device may perform more than one of these functions. Further, for some products some of these devices may not be required. For example, some products may not require peeling.

Within this embodiment a device for "cleaning" the food product refers to a device which removes dirt and/or other particles from the surface of the food product without the use of water, e.g. using pressurised air.

Within this embodiment a device for "washing" the food product refers to a device which removes dirt and/or other particles from the surface of the food product with water, including water in combination with cleaning solutions.

A device for "peeling" refers to a device capable of removing skin and/or other material from the outer surface of the food product.

A device for "cutting" describes a device comprising a blade capable of dividing the food product into smaller sized pieces. The device may comprise a blade which is manually operated by a user, e.g. a knife, or a machine containing one or more blades. Cutting may result in the food product having a size of 0.1cm³, 0.2cm³, 0.4cm³, 0.5cm³, 0.6cm³, 0.7cm³, 0.8cm³, 0.9cm³, 1cm³, 2cm³, 3cm³, 4cm³, 5cm³ , 6cm³, 7cm³, 8cm³, 9cm³, 10cm³, 11cm³, 12cm³, 13cm³, 14cm³, 15cm³, 16cm³, 17cm³, 18cm³, 19cm³, 20cm³, 25cm³, 30cm³, 35cm³, 40cm³, 45cm³, 50cm³, 60cm³, 70cm³, 80cm³, 90cm³, 100cm³ or more.

Further, in this embodiment a flow equalization device may be provided to allow for the use of food products having different characteristics, for example leafy vegetables or cubed vegetables.

The invention will now be described by means of example only by reference to the following Examples and Figures.

### Brief description of Figures

Figure 1 shows heat transfer to a potato cube using microwaves. A) Microwaves heat the potato cube from the centre. B) Active enzymes are denatured first from the centre and then outwards towards the edge of the potato cube. After 2 minutes substantially all of the enzymes had been denatured.
Figure 2 shows heat transfer to a potato cube using blanching at 98°C. A) Blanching heats the potato cube from the outside. B) Active enzymes are denatured first from the outside and then inwards towards the centre of the potato cube. After 7 minutes all of the enzymes had been denatured.
Figure 3 shows heat transfer to a potato cube using blanching at 98°C followed by microwave treatment. A) Blanching heats the potato cube from the outside and subsequent microwave treatment heats the potato cube from the inside. B) Active enzymes are denatured first from the outside during blanching and then from the inside during microwave treatment. After 2 minutes blanching and 1 minute and 40 seconds of microwave treatment all of the enzymes had been denatured.
Figure 4 shows heat transfer to a potato cube using blanching at 98°C and simultaneous microwave treatment. A) Blanching heats the potato cube from the outside and simultaneous microwave treatment heats the potato cube from the inside. B) Active enzymes are denatured from the outside by blanching and then from the inside by microwave treatment. After 1 minute and 30 seconds simultaneous blanching and microwave treatment all of the enzymes had been denatured.
Figure 5 shows diagrammatically the levels of vitamin retention in a spinach sample which has been blanched and a spinach sample which has simultaneously been blanched and subjected to microwave treatment, relative to a fresh sample.
Figure 6 shows diagrammatically the levels of vitamin retention in a potato sample which has been blanched and a potato sample which has simultaneously been blanched and subjected to microwave treatment, relative to a fresh sample.
Figure 7 shows diagrammatically the levels of vitamin retention in a pea sample which has been blanched and a pea sample which has simultaneously been blanched and subjected to microwave treatment, relative to a fresh sample.
Figure 8 shows a steam bag into which a food product or complex food product which has been subjected to the method of the invention may be put.
Figure 9 shows a flow diagram which demonstrates additional steps which may occur before and/or after the method of the invention.
Figure 10 shows heat transfer to a white cabbage leaf using blanching at 98°C and simultaneous microwave treatment. After 30 seconds simultaneous blanching and microwave treatment all of the enzymes had been denatured.

Although the present invention has been described in terms of specific exemplary embodiments, it will be appreciated that various modifications, alterations and/or combinations of features disclosed herein will be apparent to those skilled in the art without departing from the scope of the invention as set forth in the following claims.

### Detailed Description

An example of a method embodying the present invention is shown in the flow diagram of Figure 9.

In this example the method is applied to a vegetable food product. The method is carried out as a continuous flow process, and not as a batch process.

Firstly, the raw vegetables are loaded into the processing system.

Next, the vegetables are cleaned to remove dirt and/or other particles from the surface of the food product. In some examples this cleaning may be carried out without the use of water, e.g. using pressurised air.

Next, the vegetables are washed to remove dirt and/or other particles from the surface of the food product. In some examples the washing is carried out with water, including water in combination with cleaning solutions.

Next, the vegetables are peeled, removing skin and/or other material from the outer surface of the food product.

Next, the vegetables are cut, to divide the food product into smaller sized pieces.

Next the vegetables are passed through a flow equalizer, to allow for the use of food products having different characteristics, for example leafy vegetables or cubed vegetables.

In some examples, for some vegetable products some of these steps may not be required. For example, some products may not require peeling, and/or cutting, or flow equalization may not be necessary.

Then, the prepared vegetables are pre-heated. This pre-heating is carried out using water which has been used in the subsequent pre-cooling process, described below.

The pre-heated vegetables are then subject to the combined microwave and hot water blanching process for a predetermined time. The vegetables are immersed in hot water at a temperature of about 98°C, and the hot water is driven in forced convection past the vegetables using a pump. Simultaneously, the vegetables are irradiated with microwave radiation from a suitable magnetron, or array of magnetrons.

The vegetables are heated by convection heating of the outer surface of the vegetables by the hot water, and are also heated by absorption of the irradiating microwave energy within the bodies of the vegetables. The heat energy is then distributed through the vegetables by conduction from the heated outer surface.

The heating of the vegetables by absorption of the microwave energy is distributed substantially evenly throughout the vegetable material. Accordingly, it is not generally necessary to consider conduction of this heat energy.

Because the vegetables, or other food products, are heated by convection and conduction from the hot water, and are simultaneously heated by microwave irradiation, the temperature throughout the vegetables, and particularly the temperature at the vegetable core, can be quickly raised to a high enough temperature to inactivate or denature enzymes without requiring very high temperatures at the vegetable surface, which could damage or degrade the vegetable surface. This is in contrast with conventional blanching where quick heating of the food product core may require an excessively high surface temperature, resulting in possible surface damage or degradation.

The temperature of the blanching hot water is maintained by circulating hot water or steam through heat transfer elements immersed in the blanching water and/or heating elements, such as electrical resistance heating elements, immersed in the blanching water. The temperature of the blanching water will also be maintained by heating as a result of the water absorbing a part of the irradiating microwave energy which is not absorbed by the vegetables.

After the predetermined time the vegetables are subject to a pre-cooling process. The pre-cooling process cools the blanched vegetables using cold water. Preferably, the pre-cooling cools the blanched vegetables to a temperature in the range 5 to 15°C.

The cooling water used in the pre-cooling process, which has been heated by the blanched vegetables, is then used in the pre-heating process to pre-heat subsequent vegetables. This heat recovery process increases the energy efficiency of the method.

The pre-cooled vegetables are then subject to a cooling process which reduces them to a temperature in the range 5 to -3°C.

Finally, the cooled vegetables are subject to a freezing process which reduces their temperature to a deep freeze storage temperature, typically about -18°C.

In some examples the different cooling and freezing steps may be combined. In some examples, the cooling and pre-cooling steps may be combined into a single cooling step. In some examples the cooling and freezing steps may be combined into a single freezing step.

Although the example above is described as applied to vegetables, the invention may be applied to other foodstuffs.

The example described above is a continuous flow process. In other examples the invention may be applied to a batch process.

### Examples

The Examples described below were performed on spinach, potato, white cabbage and pea. As indicated in Table 2, below, these four types of vegetable are extremely different and allowed the inventors to understand the potential of the invention to a broad range of vegetables.

**Table 2 - Comparison of properties of potato and spinach**

| **Vegetable** | **Respiration tax** | **Respiration rate (mg CO₂ Kg⁻¹ h⁻¹)** | **Nutrient composition** | | | | |
|---|---|---|---|---|---|---|---|
| | | | **Water** | **Starch** | **Fibre** | **Protein** | **Ash** |
| Potato | Low | 5-10 | 80% | 15% | 2% | 2% | 1% |
| Spinach | Very high | 40-60 | 91% | 2% | 2% | 3% | 2% |

### Example 1- Heat transfer during microwave treatment

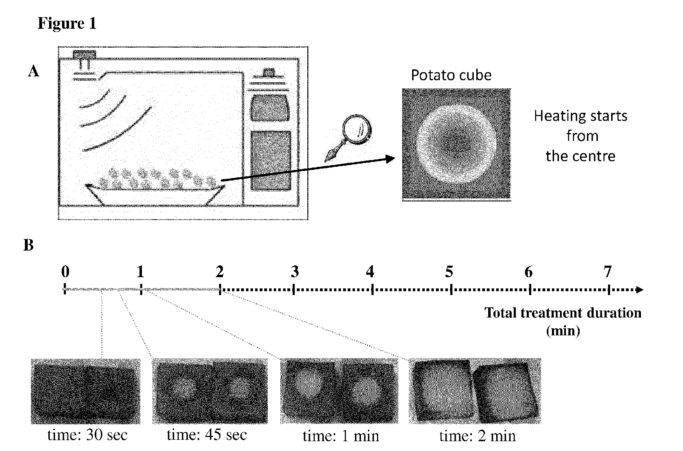

18mm³ cubes of potato were subjected to heating by microwaves for up to 2 minutes. Samples were taken at various times and analysed for peroxidase activity. As shown in Figure 1, almost all enzymes had been inactivated after two minutes, as illustrated by the almost complete lack of brown coloration.

### Example 2 - Heat transfer during blanching

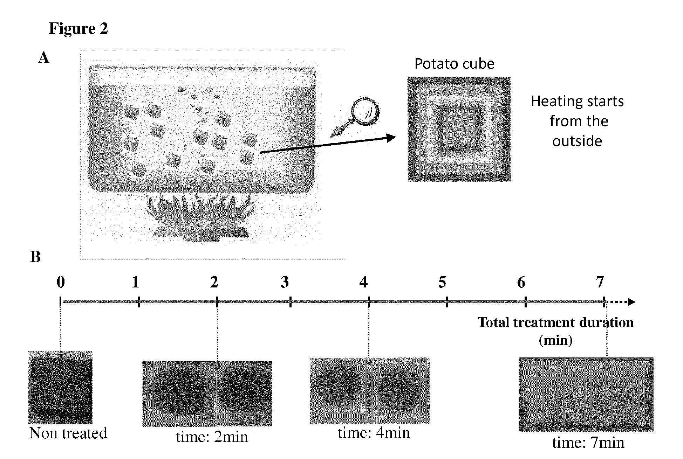

18mm³ cubes of potato were blanched at 98°C for up to 7 minutes. Samples were taken at various times and analysed for peroxidase activity. As shown in Figure 2, all enzymes had been inactivated after seven minutes, as illustrated by the complete lack of brown coloration.

### Example 3 - Heat transfer during consecutive blanching and microwave treatment

18mm³ cubes of potato were blanched at 98°C for up to 2 minutes and subsequently subjected to microwave treatment for up to 1 minute and 40 seconds. Samples were taken at various times and analysed for peroxidase activity. As shown in Figure 3, all enzymes had been inactivated after 2 minutes blanching followed by 1 minute and 40 seconds treatment with microwaves, as illustrated by the complete lack of brown coloration.

### Example 4 - Heat transfer during simultaneous blanching and microwave treatment

18mm³ cubes of potato were subjected to simultaneous hot water blanching at 98°C and microwave treatment for 1 minute and 30 seconds. Following treatment, the sample was analysed for peroxidase activity and, as shown in Figure 4, all enzymes had been inactivated, as illustrated by the complete lack of brown coloration.

This Example demonstrates that the time taken to denature the enzymes within a potato sample by simultaneously subjecting the sample to hot water blanching and microwave treatment was significantly shorter than the time taken to denature enzymes if the sample was first blanched and then subjected to microwave treatment.

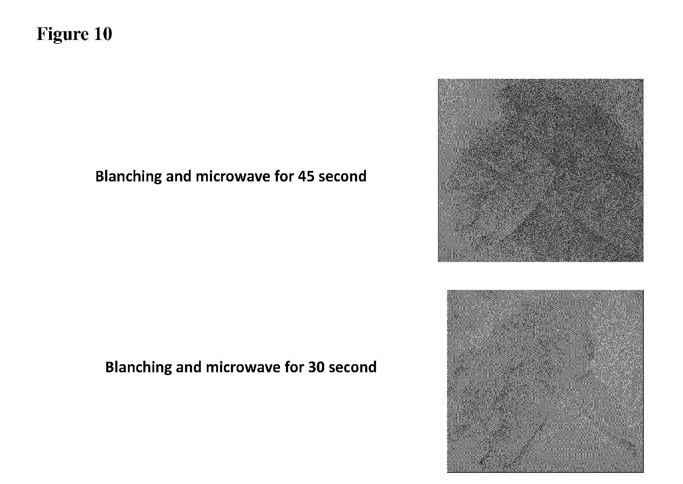

The same principle was also applied to spinach, where all enzymes were denatured after 45 seconds of simultaneous hot water blanching and microwave treatment, compared to 3 minutes of blanching and to white cabbage where all enzymes were denatured after 30 seconds of simultaneous hot water blanching and microwave treatment as shown in Figure 10.

### Example 5 - Sensory analysis; ranking test

A panel of six judges was asked to analyse three potato and three spinach samples (fresh, blanched and simultaneous hot water blanching and microwave treatment). Analysis was performed for raw vegetables, for vegetables blanched at 98°C for 3 minutes and for vegetables prepared using the method of the invention. For the method of the present invention the analysis was made, after the food product had been subjected to hot water blanching and microwaves for 45 seconds, but before the product was frozen, and repeated following performance of the method of the invention and reheating of the food product.

The samples were put in decreasing order of freshness and the judges unanimously voted for the order fresh → simultaneous hot water blanching and microwave treatment → blanched.

This analysis demonstrates that samples which have been subjected to simultaneous hot water blanching and microwave treatment are fresher and more similar to fresh vegetables than samples which have been blanched.

### Example 6 - Sensory analysis; descriptive test

A panel of six judges was asked to describe the sensory properties (e.g. visual, texture, flavour and taste parameters) of three potato and three spinach samples (fresh, blanched and simultaneous hot water blanching and microwave treatment). Analysis was performed for raw vegetables, for vegetables blanched at 98°C for 3 minutes and for vegetables prepared using the method of the invention, where the analysis was made after the food product had been subjected to blanching and microwaves for 45 seconds but before the product was frozen, and repeated following performance of the method of the invention and reheating of the food product. The results are shown in Tables 3 and 4, below.

**Table 3 - Descriptive analysis of potato samples**

| | **Fresh** | **Blanched with microwave** | **Blanched** |
|---|---|---|---|
| ***Visual*** | | | |
| Surface appearance | Dull & rough | Gloss & smooth | Gloss & smooth |
| Colour | Pale (or deep yellow) | Pale (or deep yellow) | Pale (or deep yellow) |
| ***Odor*** | Vegetable | Vegetable with notes of boiled potato | Boiled potato |

| ***Texture*** | | | |
|---|---|---|---|
| Crunchiness | Very crunchy | Crunchy | Crumbly |
| Geometric structure | Chalky | Nubby | Floury |
| ***Flavour*** | Vegetable & starchy | Vegetable, starchy with notes of boiled potato | Boiled potato & starchy |

**Table 4 - Descriptive analysis of spinach samples**

| | **Fresh** | **Blanched with microwave** | **Blanched** |
|---|---|---|---|
| ***Visual*** | | | |
| Surface appearance | Turgid & structured leaf | Unstructured but consistent bulked leaves | Unstructured & fibrous bulked leaves |
| Colour | Dark green | Emerald green | Emerald green |
| ***Odor*** | Fresh leaf with intense typical spinach notes | Weak notes of fresh & boiled spinach leaf | Note of boiled spinach leaf, cut grass & huy |

| ***Texture*** | | | |
|---|---|---|---|
| Crunchiness | Crunchy | Chewy | Flabby |
| Geometric structure | Cellular | Juicy Fibre | Fibrous |
| ***Flavour*** | Intense typical spinaches notes but bitter & salty taste piquant aftertaste | Notes of fresh & boiled spinach lead, delicate bitter & savoury taste delicate piquant aftertaste | Notes of boiled spinach leaf sweet & insipid taste |

Taken together, these results clearly demonstrate that potato and spinach samples which have been simultaneously hot water blanched and subjected to microwave treatment have properties more similar to fresh vegetables than vegetables which have been conventionally blanched.

### Example 7 - Nutrient analysis prior to freezing

Three samples of spinach and three samples of potato (fresh, blanched and simultaneous blanching and microwave treatment) were analysed for nutrient content following thermal treatment, but prior to freezing. The methods used to determine the amount of each nutrient present within the food product is indicated in Table 5, below.

**Table 5 - Methods used for nutrient determination**

| **Nutrient** | **Method used for detection** |
|---|---|
| Vitamin C | HPLC & UV detection |
| Vitamin A | HPLC & UV detection |
| Vitamin E | HPLC & fluorimetric detection |
| Fibre | Gravimetric analysis |
| Nitrate | Liquid chromatography detection |
| Folate | HPLC & fluorimetric detection |
| Na, Mg, Ca & P | HPLC & ionic chromatography |
| Fe, Cu, Zn, Se, Mn | ICP Mass |

The results are shown in Tables 6 and 7, below.

**Table 6-Nutritional analysis of potato samples**

| **Nutrient** | | F | B | MWB | % difference |
|---|---|---|---|---|---|
| Dry matter | | 22.2% | 18.5% | 19% | - |
| Vit C (ascorbic acid) | FW (mg/kg) | 175 | 138 | 148 | +6% |
| | DW (mg/kg) | 788 | 746 | 779 | +0% |
| Folate | FW (mg/kg) | 40 | 23 | 26 | +8% |
| | DW (mg/kg) | 180 | 124 | 137 | +7% |
| Vit. E (α tocoferol) | FW (mg/kg) | 100 | 70 | 80 | +10% |
| | DW (mg/kg) | 450 | 378 | 421 | +9% |
| Fibre | FW (mg/kg) | 20 | 13 | 15 | +10% |
| | DW (mg/kg) | 90 | 70 | 79 | +10% |
| Mineral salts | FW (mg/kg) | 3970 | 2719 | 3007 | +7% |
| | DW (mg/kg) | 17883 | 14697 | 15828 | +6% |
| THF | FW (mg/kg) | 8 | 5 | 6 | +12.5% |
| | DW (mg/kg) | 36 | 27 | 21 | -17% |
| 5-metTHF | FW (mg/kg) | 31 | 22 | 25 | +10% |
| | DW (mg/kg) | 140 | 119 | 132 | +9% |
| Nitrate | FW (mg/kg) | <2 | <2 | <2 | +0% |
| | DW (mg/kg) | 328 | 323 | 324 | +0% |
| Na | FW (mg/kg) | 78 | 55 | 61 | +8% |
| | DW (mg/kg) | 351 | 297 | 321 | +7% |
| Mg | FW (mg/kg) | 197 | 154 | 160 | +3% |
| | DW (mg/kg) | 887 | 832 | 842 | +1% |
| Ca | FW (mg/kg) | 62 | 44 | 49 | +8% |
| | DW (mg/kg) | 279 | 238 | 258 | +7% |
| K | FW (mg/kg) | 3093 | 2065 | 2317 | +8% |
| | DW (mg/kg) | 13932 | 11162 | 12195 | +7% |
| P | FW (mg/kg) | 527 | 392 | 410 | +3% |
| | DW (mg/kg) | 2374 | 2119 | 2158 | +2% |
| Fe | FW (mg/kg) | 5.76 | 4 | 4.6 | +10% |
| | DW (mg/kg) | 26 | 22 | 24 | +8% |
| Cu | FW (mg/kg) | 1.78 | 1.09 | 1.4 | +17% |
| | DW (mg/kg) | 8 | 6 | 7 | +13% |
| Zn | FW (mg/kg) | 3.96 | 2.83 | 3.1 | +7% |
| | DW (mg/kg) | 18 | 15 | 16 | +6% |
| Se | FW (mg/kg) | 0.06 | 0.03 | 0.04 | +17% |
| | DW (mg/kg) | 0.27 | 0.16 | 0.21 | +18% |
| Mn | FW (mg/kg) | 1.54 | 1 | 1.16 | +10% |
| | DW (mg/kg) | 7 | 5 | 6 | +14% |

| | | | | | |
|---|---|---|---|---|---|
| *F = Fresh; B = Blanched (T=98°C; time=3 min) + cooling in water (T=6°C; time=3 min)* *MWB* = *Simultaneously blanched* & *microwaved (microwave in boiling water (total time=45 sec)* + *cooling in water (T=6°C; time=3 min)* *FW = Fresh weight; DW* = *Dry weight* *% diff. = Nutrient retention of MWB relative to B* | | | | | |

**Table 7-Nutritional analysis of spinach samples**

| **Nutrient** | | F | B | MWB | % difference |
|---|---|---|---|---|---|
| Dry matter | | 6.98% | 5.71% | 6.81% | - |
| Vit C (ascorbic acid) | FW (mg/kg) | 199 | 107 | 167 | +30% |
| | DW (mg/kg) | 2851 | 1874 | 2452 | +20% |
| Folate | FW (mg/kg) | 340 | 121 | 317 | +58% |
| | DW (mg/kg) | 4871 | 2119 | 4655 | +50% |
| Vit. E (α tocoferol) | FW (mg/kg) | 3460 | 1250 | 1940 | +20% |
| | DW (mg/kg) | 49570 | 21891 | 28488 | +13% |
| Fibre | FW (mg/kg) | 16 | 10 | 13 | +19% |
| | DW (mg/kg) | 229 | 175 | 191 | +7% |
| Mineral salts | FW (mg/kg) | 11804 | 6779 | 9499 | +23% |
| | DW (mg/kg) | 169105 | 118725 | 139480 | +12% |
| THF | FW (mg/kg) | 6 | 4 | 9 | +83% |
| | DW (mg/kg) | 86 | 70 | 82 | +14% |
| 5-metTHF | FW (mg/kg) | 334 | 116 | 228 | +34% |
| | DW (mg/kg) | 4785 | 2032 | 3348 | +27% |
| Vit A (retinol eq) | FW (mg/kg) | 12120 | 9050 | 11790 | +23% |
| | DW (mg/kg) | 173639 | 158494 | 173128 | +8% |
| α Carotene | FW (mg/kg) | 6 | 12 | 8 | -67% |
| | DW (mg/kg) | 85 | 201 | 110 | -106% |
| B Carotene | FW (mg/kg) | 46 | 53 | 49 | -8% |
| | DW (mg/kg) | 656 | 923 | 720 | -31% |
| Nitrate | FW (mg/kg) | 1818 | 872 | 1241 | +20% |
| | DW (mg/kg) | 26047 | 15263 | 18226 | +11% |
| Na | FW (mg/kg) | 274 | 139 | 214 | +27% |
| | DW (mg/kg) | 3926 | 2434 | 3142 | +18% |
| Mg | FW (mg/kg) | 701 | 329 | 536 | +30% |
| | DW (mg/kg) | 10043 | 5762 | 7871 | +21% |
| Ca | FW (mg/kg) | 4874 | 3006 | 2362 | -13% |
| | DW (mg/kg) | 69828 | 52644 | 34684 | -26% |
| K | FW (mg/kg) | 8526 | 2957 | 5958 | +35% |
| | DW (mg/kg) | 122149 | 51786 | 87489 | +29% |
| P | FW (mg/kg) | 410 | 334 | 410 | +19% |
| | DW (mg/kg) | 5874 | 5849 | 6021 | +3% |
| Fe | FW (mg/kg) | 9.3 | 7.1 | 10.7 | +39% |
| | DW (mg/kg) | 133 | 124 | 157 | +25% |
| Cu | FW (mg/kg) | 1.65 | 1.4 | 1.6 | +12% |
| | DW (mg/kg) | 24 | 25 | 23 | -8% |
| Zn | FW (mg/kg) | 4.36 | 3.4 | 3.6 | +5% |
| | DW (mg/kg) | 63 | 60 | 53 | -11% |
| Se | FW (mg/kg) | 0.05 | 0.02 | 0.03 | +40% |
| | DW (mg/kg) | 0.72 | 0.35 | 0.44 | +13% |
| Mn | FW (mg/kg) | 3.13 | 2.27 | 2.67 | +13% |
| | DW (mg/kg) | 45 | 40 | 39 | -2% |

| | | | | | |
|---|---|---|---|---|---|
| *F = Fresh; B = Blanched (T=98°C; time=3 min) + cooling in water (T=6°C; time=3 min)* *MWB* = *Simultaneously blanched* & *microwaved (microwave in boiling water (total time=45 sec)* + *cooling in water (T=6°C; time=3 min)* *FW = Fresh weight; DW* = *Dry weight* *% diff. = Nutrient retention of MWB relative to B* | | | | | |

Tables 6 and 7 demonstrate that all measured nutrients are retained to a greater extent through the simultaneous application of hot water blanching and microwave treatment than through blanching alone.

### Example 8 - Analysis of results; potatoes

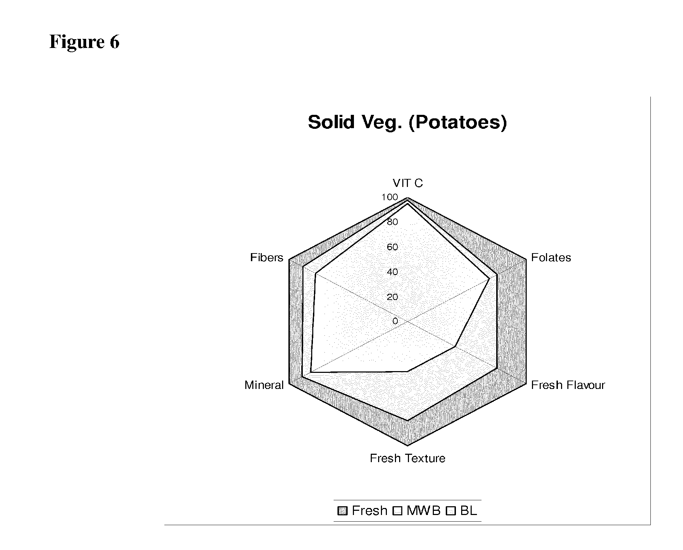

As shown in Figure 6, a small improvement was measured in nutritional values for potatoes following simultaneous application of hot water blanching and microwave treatment as compared to blanching alone because potatoes are quite poor in nutrition.

However, as shown in Table 3, a very good texture and flavour was observed when the potatoes were subjected to simultaneous hot water blanching and microwave treatment, as compared to blanching alone. The simultaneous hot water blanching and microwave sample was much more similar to the fresh sample than the blanched sample.

These results can be extrapolated to all solid vegetables.

### Example 9 - Analysis of results; spinach

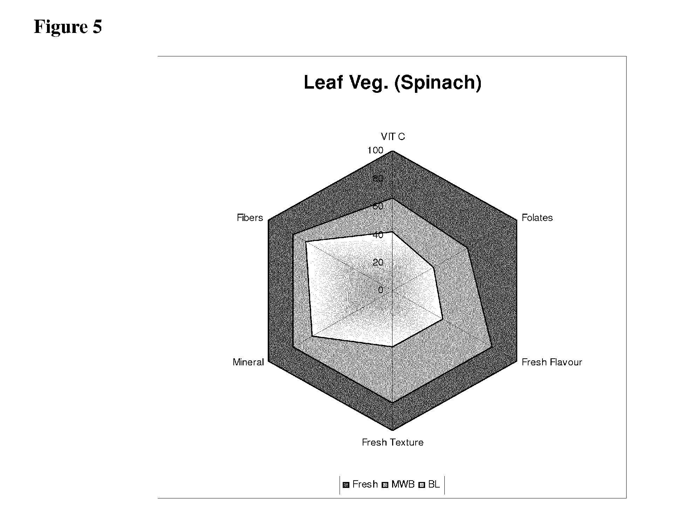

As shown in Figure 5, a very good improvement was measured in nutritional values for spinach following simultaneous application of hot water blanching and microwave treatment as compared to blanching alone, especially for the heat sensitive nutrients e.g. vitamin C and folate.

Moreover, as shown in Table 4, a very good texture and flavour was observed when the spinach were subjected to simultaneous hot water blanching and microwave treatment, as compared to blanching alone. The simultaneous hot water blanching and microwave sample was much more similar to the fresh sample than the blanched sample.

These results can be extrapolated to all leafy vegetables.

### Example 10 - Analysis of results; peas

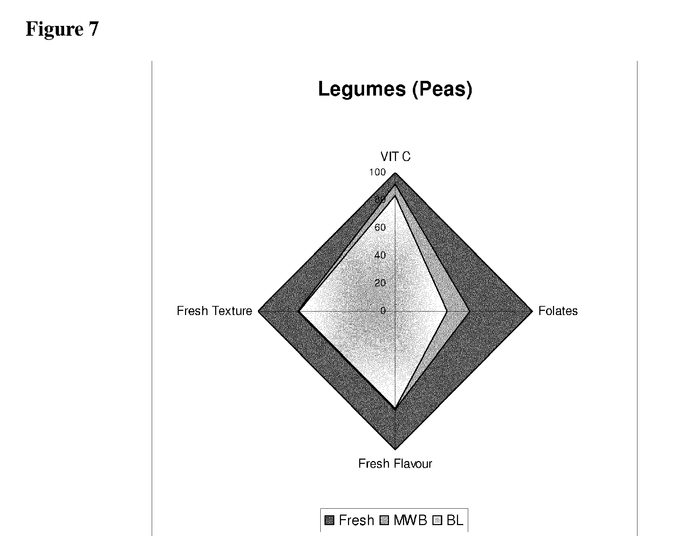

As shown in Figure 7, a small improvement was measured for nutritional values of peas which had been subjected to the simultaneous application of hot water blanching and microwave treatment as compared to blanching alone. However, only minor differences where perceived in the flavour profile.

This example demonstrates that different vegetable types and shapes are affected differently by the combined simultaneous hot water blanch and microwave treatment, and in the case of peas the advantage was seen more in terms of vitamin retention than in a organoleptic improvement compared to conventional blanching. These results can be extrapolated to all legumes.

### Example 11 - Nutrient analysis following freezing and subsequent cooking

After thermal treatment all samples were frozen, packed into a steam bag and reheated in a microwave oven at a temperature of at least 75°C. Nutritional and sensory analysis were repeated, and the results of the nutritional analysis are shown in Table 7, below. After thermal treatment (except for the samples F) all samples were frozen, packed into a steam bag and reheating in a microwave oven at a temperature of at least 75°C. These results confirm those shown in Examples 5-7.

**Table 7 - Nutritional analysis of spinach after re-heating**

| | ***Dry matter*** | ***Vit C (Ascorbic acid)*** | | ***Total folate*** | | ***Nitrate*** | |
|---|---|---|---|---|---|---|---|
| | ***%*** | ***FW (mg*/*kg)*** | ***DW (mg*/*kg)*** | ***FW (ug*/*kg)*** | ***DW (ug*/*kg)*** | ***FW (mg*/*kg)*** | ***DW (mg*/*kg)*** |
| *F* | 5,7 | 359 | 6341 | 280 | 4946 | 751 | 13253 |
| *B* | 8,1 | 140 | 1750 | 92 | 1148 | 302 | 3775 |
| *MWB* | 7,7 | 312 | 4070 | 263 | 3427 | 472 | 6157 |
| *Diff%* | | +47% | +36% | +61% | +46% | +22% | +17% |

| | | | | | | | |
|---|---|---|---|---|---|---|---|
| *F = Fresh; B = Blanched (T=98°C; time=3 min) + cooling in water (T=6°C; time=3 min)* *MWB = Simultaneously blanched & microwaved* (*microwave in boiling water (total time=45 sec) + cooling in water (T=6°C; time=3 min)* *FW = Fresh weight; DW = Dry weight* *% diff. = Nutrient retention of MWB relative to B* | | | | | | | |

The simultaneous application of hot water blanching and microwave treatment was also tested on green peas, and the same results were observed as shown in Table 8, below. After thermal treatment (except for the samples F) all samples were frozen, packed into a steam bag and reheating in a microwave oven at a temperature of at least 75°C.

**Table 8 - Nutritional analysis of peas after re-heating**

| | ***Dry matter*** | ***Vit C (Ascorbic acid)*** | | ***Total folate*** | |
|---|---|---|---|---|---|
| | **%** | ***FW (mg*/*kg)*** | ***DW (mg*/*kg)*** | ***FW (ug*/*kg)*** | ***DW (ug*/*kg)*** |
| *F* | 25,7 | 221 | 860 | 311 | 1210 |
| *B* | 20,7 | 195 | 944 | 144 | 697 |
| *MWB* | 20,4 | 211 | 1036 | 203 | 996 |
| *Diff%* | | +7% | +11% | +19% | +24% |

| | | | | | |
|---|---|---|---|---|---|
| *F = Fresh; B = Blanched (T=98°C; time=3 min) + cooling in water (T=6°C; time=3 min)* *MWB = Simultaneously blanched & microwaved (microwave in boiling water (total time=45 sec) + cooling in water (T=6°C; time=3 min)* *FW = Fresh weight; DW = Dry weight* *% diff. = Nutrient retention of MWB relative to B* | | | | | |

The above description relates to exemplary embodiments of the invention. It will be understood that features described in relation to one embodiment may also be used in another embodiment. The skilled person will be able to envisage alternatives within the scope of the present invention as set out in the appended claims.

## Claims

1. A method for preparing a food product for storage comprising:
a) subjecting the food product to microwaves and hot water blanching simultaneously; and
b) subsequently freezing the food product.

2. The method of claim 1, wherein the method is carried out as a continuous process, and the microwaving and hot water blanching are carried out simultaneously in a single processing step of the continuous process.

3. The method of claim 1 or claim 2, wherein the food product is subjected to microwaves and hot water blanching at a temperature of at least 98°C.

4. The method of any preceding claim, wherein the food product is subjected to microwaves and hot water blanching at a temperature of not more than 99°C.

5. The method of any preceding claim, wherein the food product is subjected to microwaves and hot water blanching at atmospheric pressure.

6. The method of any preceding claim wherein the food product is subjected to microwaves and hot water blanching for a total maximum time of 3 minutes.

7. The method of any preceding claim, wherein the food product is cooled prior to freezing.

8. The method of claim 7, wherein the food product is cooled in water.

9. The method of claim 8, wherein the water is at a temperature of 0 to 10°C.

10. The method of any one of claims 7 to 9, wherein the food product is cooled for a period of 1 to 5 minutes.

11. The method of any preceding claim, wherein the food product is fish, meat, a fruit, a vegetable, a pulse, a herb or a spice.

12. The method of any preceding claim, wherein the method further comprises the step of combining the food product into a complex food product.

13. A method for preparing a complex food product for storage comprising:
a) subjecting a food product to simultaneous microwaves and hot water blanching;
b) combining the food product into a complex food product; and
c) subsequently freezing the complex food product.

14. A food product or complex food product prepared according to the method of any one of the preceding claims.

15. A system for preparing a food product for storage comprising:
a) a device capable of subjecting a food product to simultaneous microwaves and hot water blanching; and
b) a freezer.
